# EUROPÄISCHE PATENTSCHRIFT

(11) **EP 3 570 232 B1**
(45) Veröffentlichungstag und Bekanntmachung des Hinweises auf die Patenterteilung: **24.12.2025**
(21) Anmeldenummer: 18172325.5
(22) Anmeldetag: 15.05.2018
(51) Int. Cl.: G06Q 10/087

(54) **MEHRWEGSYSTEM MIT ZERLEGBAREN TRANSPORTBEHÄLTERN**
MULTIPATH SYSTEM COMPRISING COLLAPSIBLE TRANSPORT CONTAINERS
SYSTÈME À PLUSIEURS VOIES DOTÉ DE CONTENEURS DE TRANSPORT DÉMONTABLES

(43) Veröffentlichungstag der Anmeldung: 20.11.2019
(73) Patentinhaber: Game Changer AG, 92660 Neustadt a.d. Waldnaab (DE)
(72) Erfinder: Krachtus, Werner, 92699 Bechtsrieth (DE)
(74) Vertreter: Lermer, Christoph

(56) Entgegenhaltungen:
- EP-A1- 2 525 309
- EP-A1- 2 910 484
- NN: "Dishwasher", 10 May 2018 (2018-05-10), XP055503321, Retrieved from the Internet <URL:https://en.wikipedia.org/w/index.php?title=Dishwasher&oldid=840527044> [retrieved on 20180830]

## Beschreibung

### TECHNISCHES GEBIET

Die Anmeldung bezieht sich auf ein System zur Bereitstellung von Konsumgütern, insbesondere von Lebensmitteln, umfassend: wenigstens eine Verbraucherstation; und eine zentrale Kommissionierstation zur Kommissionierung von Waren bestellter Warenkörbe. Außerdem betrifft die Anmeldung ein Verfahren zur Bereitstellung von Konsumgütern, insbesondere von Lebensmitteln, umfassend die folgenden Schritte: a) Übertragung von Daten (b) zur Zusammenstellung eines Warenkorbs aus einer Vielzahl von Waren von der Verbraucherstation zu einer Kommissionierstation; b) Übertragung von Steuerungsdaten (c) an ein Behälterlager zur Auswahl eines für den bestellten Warenkorb geeigneten Transportbehälters.

### STAND DER TECHNIK

Lebensmittel werden in der Regel über den Einzelhandel an die Endverbraucher abgegeben. Die Zusammenstellung der Waren erfolgt in einem Verkaufsgeschäft in der Regel durch den Verbraucher.

Im Online-Handel bestellt der Verbraucher auf elektronischem Weg. Die bestellten Waren werden entweder separat versendet oder beim Online-Händler zusammengestellt und dann in einem Paket versendet. Ein separates Versenden der Waren ist mit erhöhtem Aufwand bei der Verpackung und beim Porto verbunden. Außerdem ist ein Versenden mehrerer Pakete für eine Bestellung/ Warenkorb nicht umweltfreundlich. Dieses Problem kann durch den Einsatz einer automatisierten Kommissionierstation zur Kommissionierung der Waren einer Bestellung/ eines Warenkorbs gelöst werden. Die zusammengestellten Waren werden in einem Paket verpackt und als Einheit versendet.

Auch bei diesem System ist jedoch der Verpackungsaufwand hoch, insbesondere da bei Lebensmittelbestellungen die Paketgrößen sehr unterschiedlich sein können. Außerdem fällt die Verpackung des kommissionierten Warenkorbs beim Kunden als Restmüll an. Auch diese Lösung ist daher hinsichtlich des Umweltschutzes verbesserungswürdig.

Herkömmliche Mehrwegsysteme kommen dagegen in Bereichen des Einzelhandels, in denen, wie z.B. im Lebensmittelbereich, Warenkörbe unterschiedlicher Größe zusammengestellt werden, nicht vor, da unterschiedliche Größen von Mehrwegbehältern zum Transport der kommissionierten Waren eingesetzt werden müssten. Die Folge davon wäre ein enormer Lageraufwand und Platzbedarf, sowie hoher Aufwand für die logistische Handhabung der Transportbehälter im System.

Die EP 2 525 309 A1 weist ein System zur Bereitstellung von Lebensmitteln für Endverbraucher mit mehreren dezentralen Verbraucherstationen, einer zentralen Kommissionierstation, einem zentralen Lager, Warenkörben sowie einer dezentralen Abholstation auf.

Die EP 2 910 484 A1 beschreibt ein Verbindungselement zum lösbaren Zusammenbau von flächigen Elementen, wie dem Boden und den Seitenwänden von Behältern, Kisten und dergleichen.

### AUFGABE DER ERFINDUNG

Ausgehend davon besteht die Aufgabe der vorliegenden Erfindung darin, ein umweltfreundliches System und Verfahren zur Bereitstellung von Konsumgütern, insbesondere von Lebensmitteln, bereitzustellen.

### TECHNISCHE LÖSUNG

Diese Aufgabe wird gelöst durch ein System und ein Verfahren zur Bereitstellung von Konsumgütern, insbesondere von Lebensmitteln, gemäß dem Anspruch 1 bzw. gemäß dem Anspruch 7. Vorteilhafte Ausfiihrungsformen der Erfindung ergeben sich aus den Merkmalen der abhängigen Ansprüche.

Das erfindungsgemäße System zur Bereitstellung von Konsumgütern, insbesondere von Lebensmitteln, umfasst: wenigstens eine Verbraucherstation; und eine zentrale Kommissionierstation zur Kommissionierung von Waren bestellter Warenkörbe. Das System umfasst außerdem eine Vielzahl von Transportbehältern, wobei die Transportbehälter aus standardisierten Komponenten aufgebaut und in diese Komponenten zerlegbar/ voneinander lösbar sind.

Der Erfindung liegt der Gedanke zugrunde, dass ein System mit Transportbehältern bereitgestellt wird, die aus standardisierten Mehrwegkomponenten zusammengebaut sind. Die Komponenten werden, ausgehend von einer Bestellung eines Warenkorbs, zu einem Transportbehälter zusammengebaut. Dabei können die Komponenten des Transportbehälters vor dem Zusammenbau des Behälters so ausgewählt werden, dass die Größe des Transportbehälters dem Platzbedarf zum Transport der Waren des Warenkorbs entspricht. So kann z.B. ein Bodenteil mit unterschiedlich hohen Wandteilen kombiniert werden, um Transportbehälter mit unterschiedlichem Volumen bereitzustellen.

Durch das Mehrwegsystem wird außerdem eine umweltfreundliche Lösung geboten. Zudem sind die Komponenten leichter zu reinigen als starre Transportbehälter. In der Regel werden die standardisierten Komponenten wandartige, also einfach zu handhabende, Bauteile sein oder umfassen. Werden die Transportbehälter vor dem Reinigen zerlegt, kann die Anzahl schwer zugänglicher Ecken etc. reduziert werden.

Ein weiterer Vorteil liegt in der einfacheren und platzsparenden Lagerung der standardisierten Komponenten gegenüber einer Einlagerung zusammengebauter und ggf. unterschiedlich großer Transportbehälter.

Die einzelnen Komponenten sind darüber hinaus einfach austauschbar, wenn sie z.B. beschädigt oder stark verschmutzt sind.

Die Mehrwegbehälter bzw. deren Komponenten zirkulieren in einem Materialkreislauf so lange, bis sie aus dem System entnommen werden. Damit können die Komponenten der Behälter vielfach verwendet und die Entstehung von Verpackungsabfall vermieden werden. Die Behälter sind standardisiert und zum mehrfachen Einsatz innerhalb des Systems vorgesehen.

Zur Identifikation können die Mehrwegbehälter oder die Komponenten eine Kennzeichnung aufweisen, z.B. in Form eines RFID-Chips, eines Barcodes, ID-Codes, etc.. Auf diese Weise kann der Behälter bzw. die Komponente getrackt werden und z.B. seine/ ihre Benutzungshäufigkeit festgehalten werden.

Der Begriff der Verbraucherstation ist im Rahmen der Erfindung in einem weiten Sinn zu verstehen. Die muss kein geschlossener Ort sein, sondern lediglich die Station darstellen, an die die Kommissionierstion die befüllten und kommissionierten Behälter abgibt. Dies kann ein privater Haushalt, aber z.B. auch ein Bereich eines Verkaufsladens sein.

Die Komponenten sind vorzugsweise Wandelemente, die Boden-, Wand- und/oder Deckelteile des Transportbehälters bilden.

In einer Variante der Erfindung weisen die Komponenten Verbindungsanschlüsse auf, die mit den Verbindungsanschlüssen einer benachbart angeordneten Komponente verbindbar sind, um einen Transportbehälter zu bilden. Insbesondere sind die Verbindungen lösbar.

Die Verbindungsanschlüsse können zur Herstellung einer reibschlüssigen, kraftschlüssigen und/oder formschlüssigen Verbindung ausgebildet sein.

Die Verbindungsanschlüsse sind insbesondere zur Herstellung einer Steckverbindung und/oder einer Rastverbindung ausgebildet. Die Verbindungen können arretierbar sein.

Es ist auch möglich, Magnetelemente in wenigstens einem Teil der Behälterkomponenten zu integrieren. Diese können zur Verbindung der Komponenten, aber auch zur Handhabung der Transportbehälter verwendet werden.

Die zentrale Kommissionierstation kann eine Datenverarbeitungseinheit zur Erfassung von Bestellungen eines Warenkorbs seitens der Verbraucherstation aufweisen.

Die Kommissionierstationweist weist insbesondere wenigstens eine Kommissioniereinheit zur Zusammenstellung der Waren eines bestellten Warenkorbs in einem der Transportbehälter auf.

Die Kommissionierstation weist vorzugsweise eine Aufnahmeeinheit für die Aufnahme benutzter, von den Verbraucherstationen in die Kommissionierstation zurück transportierter Transportbehälter und/oder deren Komponenten auf. Die Aufnahmeeinheit wirkt als Leergutannahme für die Kommissionierstation. In den Transportbehältern kann der Verbraucher beispielsweise auch Verpackungsmaterial zurücksenden.

Die Aufnahmeeinheit kann wenigstens eine Demontageeinheit zum Zerlegen der von den Verbraucherstationen in die Kommissionierstation zurück transportierten Transportbehälter aufweisen. Die Demontageeinheit kann räumlich mit der Aufnahmeeinheit verbunden oder aber von dieser getrennt sein.

Die Aufnahmeeinheit kann beispielsweise auch Einrichtungen für die Inspektion der Transportbehälter bzw. deren Komponenten aufweisen.

Das Zerlegen, wie auch das Einlagern der Komponenten und der Zusammenbau können vorzugsweise automatisiert erfolgen.

Die Kommissionierstation kann wenigstens eine Wasch-/ Sterilisiereinheit zum Waschen und/oder Sterilisieren von Komponenten der von der Verbraucherstationen in die Kommissionierstation zurück transportierten und zerlegten Transportbehälter aufweisen.

Das erfindungsgemäße Verfahren zur Bereitstellung von Konsumgütern, insbesondere von Lebensmitteln, umfasst die folgenden Schritte: a) Übertragung von Daten zur Zusammenstellung eines Warenkorbs aus einer Vielzahl von Waren von der Verbraucherstation zu einer Kommissionierstation; b) Übertragung von Steuerungsdaten an ein Behälterlager zur Auswahl eines für den bestellten Warenkorb geeigneten Transportbehälters; c) Zusammenbau des geeigneten, aus standardisierten, im Behälterlager gelagerten Komponenten; und d) Zusammenstellung der Waren des bestellten Warenkorbs in dem Transportbehälter in einer Kommissioniereinheit der Kommissionierstation.

Die Verbraucherstationen sind beispielsweise internetfähige Geräte (Mobiltelefon, Rechner), die jedenfalls eine Eingabeeinheit und ein Display aufweisen, sodass sowohl die Produktangebote abgerufen als auch Bestellungen aufgegeben werden können. Die angebotenen Produkte können in geeigneter Weise präsentiert werden, z.B. durch Angabe der Marke oder durch Darstellung einer verpackten Produkteinheit. Insbesondere weist das System eine Vielzahl von Verbraucherstationen und eine Datenaustauschverbindung zwischen den Verbraucherstationen und der zentralen Kommissionierstation zur Übermittlung eines Kommissionierauftrags auf.

Eine Bestellung kann beispielsweise per Internet erfolgen. Bei dieser Art der Bestellung können Präferenzen der einzelnen Kunden festgehalten und bei nachfolgenden Käufen Vorschläge für die Zusammenstellung von Warenkörben gemacht werden. Der Vorgang kann weitgehend automatisiert werden. Außerdem bietet das elektronische Anbieten bekannte Vorteile, nämlich die einfache und kostengünstige Vermittlung von Werbung, Verbrauchertips, etc., insbesondere gezielt, in Abhängigkeit von den Präferenzen der Kunden. Zudem können Kosten gespart werden, da der Einzelhandel und dessen Leistungen entfallen, und die Ware nicht aufwendig verpackt und präsentiert werden muss. Das Verfahren ist jedoch nicht auf eine spezielle Art der Bestellung beschränkt.

Das Verfahren kann als weiteren Schritt den Transfer des von der Kommissioniereinheit bereitgestellten Transportbehälters an eine Auslieferungseinheit zur Auslieferung an eine durch die Bestellung vorgegebene Verbraucherstation aufweisen.

Das Verfahren kann als weiteren Schritt das Zerlegen eines von der Verbraucherstation zur Kommissionierstation zurück transferierten Transportbehälters in einzelne (standardisierte) Komponenten aufweisen. Dies kann in einer Demontagestation geschehen, die spezielle Werkzeuge aufweisen kann, um die Komponenten voneinander zu lösen.

Das Verfahren kann als weiteren Schritt den Transfer der Komponenten der zerlegten Transportbehälter zu einer Wasch-/ Sterilisiereinheit zum Waschen und/oder Sterilisieren des Transportbehälters aufweisen. Dieser Schritt ist im Lebensmittelbereich u.a. aus hygienischen Gründen erforderlich.

Das Verfahren kann als weiteren Schritt das Einlagern der Komponenten der zerlegten Transportbehälter in ein Behälterlager aufweisen.

Die Mehrweg-Transportbehälter und deren Komponenten, in die sie sich zerlegen lassen, sind insbesondere standardisiert. Die Größe des Transportbehälters kann an eine Bestellung angepasst werden. Insbesondere wird automatisiert ein Behälter geeigneter Größe vom Behälterlager bereitgestellt, wenn eine entsprechende Steuerungsdatei, die auf Basis der Bestellung generiert wird, eingeht.

### KURZE BESCHREIBUNG DER FIGUREN

Weitere Merkmale und Vorteile der Erfindung werden aus der nachfolgenden Beschreibung anhand der beigefügten Figuren deutlich. Es zeigen:
Figur 1 eine schematische Darstellung einer Ausführungsform eines erfindungsgemäßen Systems zur Bereitstellung von Lebensmitteln;
Figur 2 einen detaillierten Ausschnitt des Systems aus der Figur 1;
Figur 3 einen im Zusammenhang mit den Systemen verwendeten Transportbehälter in zusammengebautem Zustand; und
Figur 4 einen im Zusammenhang mit den Systemen verwendeten Transportbehälter in zerlegtem Zustand.

### DETAILLIERTE BESCHREIBUNG EINES BEVORZUGTEN AUSFÜHRUNGSBEISPIELS

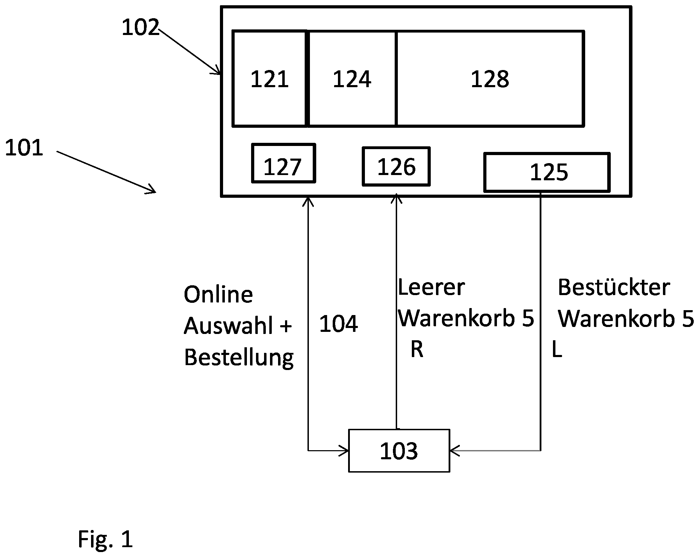

Die Figur 1 zeigt schematisch ein erfindungsgemäßes System 101 zur Bereitstellung von Konsumgütern, insbesondere von Lebensmitteln. Das System 101 weist eine zentrale Kommissionierstation 102 und wenigstens eine dezentrale Verbraucherstation 103, vorzugsweise aber eine Vielzahl von Verbraucherstationen, auf.

Die zentrale Kommissionierstation 102 ist insbesondere eine (weitgehend) automatisierte Logistikanlage, die entsprechend Aufträgen/ Kundenbestellungen Warenkörbe für Endverbraucher zusammenstellt. Zur Zusammenstellung der zu einem Warenkorb/ einer Bestellung gehörenden Waren bedient sich die die Kommissioniereinheit 124 aus einem ihr angeschlossenen Warenlager 128 mit bereits verpackten Waren. Unter einem Warenkorb sind im Zusammenhang mit der Erfindung einzelne oder mehrere Produkte einer Bestellung zu verstehen. Die zu einem Warenkorb gehörenden Waren werden, wie im folgenden beschrieben, in einen Transportbehälter 5 eingebracht, und in dem Transportbehälter 5 ausgeliefert.

Zwischen der Kommissionierstation 102 und den vorzugsweise mehreren Verbraucherstationen (von denen hier beispielhaft eine Verbraucherstation 103 dargestellt ist) findet ein Warenaustausch und ein Informationsaustausch statt. Der Warenaustausch wird mittels erfindungsgemäßer Transportbehälter 5 bewerkstelligt, die zwischen den Verbraucherstationen 103 und der zentralen Kommissionierstation 102 zirkulieren, wobei die Transportbehälter 5 in einem ersten Abschnitt des Kreislaufs zusammengebaut und mit einem Produkt befüllt, in einem zweiten Abschnitt des Kreislaufs weitgehend leer und/oder in einzelne Komponenten zerlegt sind.

Der Transport zwischen den Stationen 102 und 103 kann mittels Fahrzeugen erfolgen. Dabei wird ein mit Produkten eines Warenkorbs bestückter Transportbehälter 5 zu einer Verbraucherstation 103 transportiert (Pfeil L). Der Transportbehälter wird dort entleert und als Leergut zur Kommissionierstation 102 zurück befördert (Pfeil R). Bei der Rückbeförderung kann der Transportbehälter optional bereits in Einzelkomponenten zerlegt sein.

Der Transport der Transportbehälter oder von deren Komponenten innerhalb der Kommissionierstation 102 kann unter anderem über Transport- oder Förderbänder o. ä. erfolgen. Der Informationsaustausch erfolgt vorzugsweise über elektronischen Datenaustausch mittels eines Kommunikationssystems 104. Das Kommunikationssystem 104 kann drahtlose Verbindungen (z.B. W-LAN, Mobilfunk) und/oder Verbindungen über Datenleitungen umfassen. Das Kommunikationssystem umfasst außerdem Sende- und Empfangsstationen.

Die Kommissionierstation 102 weist im Wesentlichen eine Leergutaufnahmeeinheit 126 zur Aufnahme der leeren oder zerlegten Transportbehälter 5, eine Wasch-/ Sterilisiereinheit 127 zum Waschen der leeren Transportbehälter 5 oder deren Komponenten, ein Lager 121 zum Einlagern der Komponenten der zerlegten Transportbehälter 5, eine Kommissioniereinheit 124, und ein Warenlager 128 auf. Von der Kommissioniereinheit 124 werden mit Waren befüllte Transportbehälter 5 an eine Auslieferungseinheit 125 abgegeben und von dort jeweils zu der der Bestellung zugeordneten Verbraucherstation 103 transportiert.

Der Begriff "Verbraucherstation" muss im Rahmen der Erfindung keine räumlich lokalisierte Einheit sein. So kann eine Verbraucherstation einerseits eine Lieferadresse bzw. einen Lieferort, andererseits z.B. ein Mobiltelefon umfassen, von dem aus die Bestellungen getätigt werden.

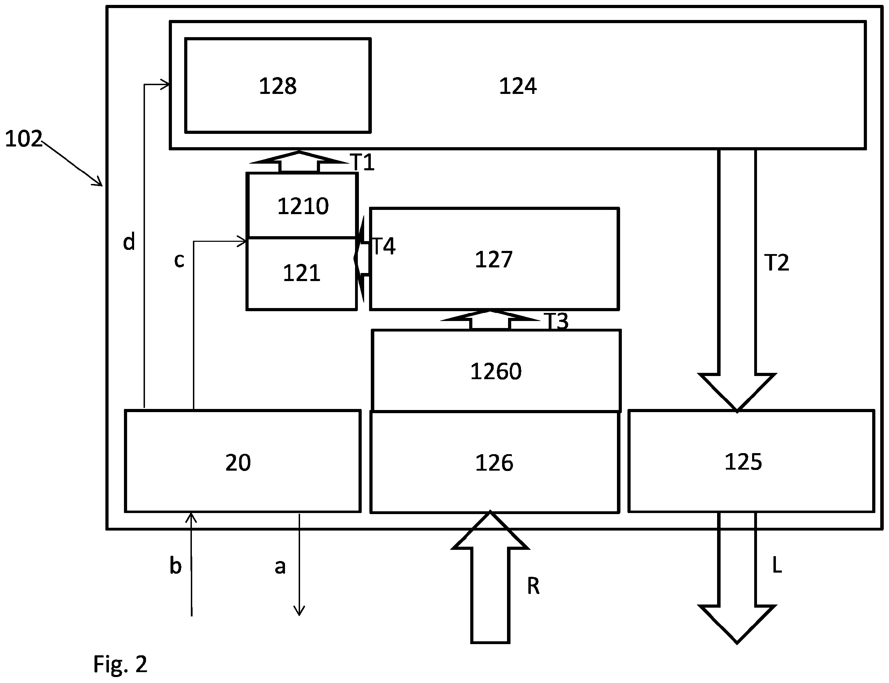

In der Figur 2 sind weitere Details der Kommissionierstation 102 des erfindungsgemäßen Systems 101 dargestellt.

Die Kommissionierstation 102 weist eine Datenverarbeitungseinheit 20 auf. Die Datenverarbeitungseinheit 20 erfüllt wenigstens die folgenden Aufgaben. In der Datenverarbeitungseinheit 20 ist ein Katalog bestellbarer Produkte hinterlegt, aus denen ein Benutzer von der Verbraucherstation 3 aus Produkte auswählen kann. Das online-Angebot ist durch den mit dem Buchstaben a gekennzeichneten Pfeil symbolisiert. Das Warenangebot und die Warenpräsentation können, basierend auf vom Endverbraucher bereitgestellten Informationen oder abgeleitet aus dem früheren Kaufverhalten des Endverbrauchers, an den einzelnen Verbraucher angepasst werden.

Nach der Auswahl eines oder mehrerer der Produkte gibt der Benutzer von der Verbraucherstation 103 aus vorzugsweise elektronisch eine Bestellung, dargestellt durch den mit dem Buchstaben b gekennzeichneten Pfeil, auf. Diese Bestellung b wird durch die Datenverarbeitungseinheit 20 aufgenommen und als Auftrag zur Erstellung eines Warenkorbs bearbeitet. Die Zahlungsabwicklung kann in bekannter Weise, wie etwa in Internet-Verkaufssystemen (Internet-Shops), erfolgen.

Die Datenverarbeitungseinheit 20 gibt entsprechend dem Auftrag direkt oder indirekt Steuerungsdaten bzw. Befehle an das Lager 121 mit den eingelagerten Transportbehälter-Komponenten (Pfeil c) und die Kommissioniereinheit 124 (Pfeil d).

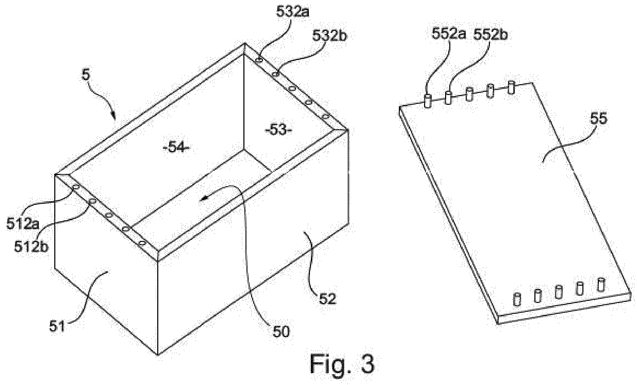

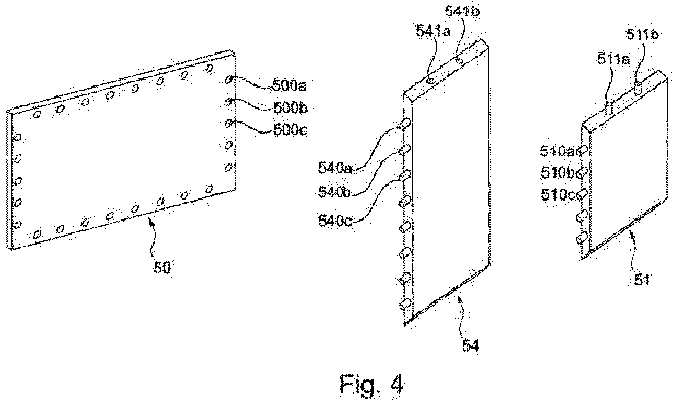

Die Kommissionierstation 102 weist darüber hinaus eine Auslieferungseinheit 125 zur Auslieferung bestückter Transportbehälter 5 an die jeweiligen Verbraucherstationen 103 auf. Die Besonderheit an diesem System 101 ist, dass die Waren eines Auftrags (Warenkorb) in speziellen Transportbehältern 5 (vgl. Fig. 3, 4) gesammelt und in diesen von der Auslieferungseinheit 125 zur jeweiligen Verbraucherstation 103 transportiert werden.

Die standardisierten Transportbehälter 5 des Systems 101 sind erfindungsgemäß aus standardisierten Komponenten 50, 51, 52, 53, 54, 55 (vgl. Fig. 3, 4), die als Mehrwegkomponenten eingesetzt werden, aufgebaut. Die Komponenten 50, 51, 52, 53, 54, 55 zirkulieren im System 101, teilweise mit anderen Mehrwegkomponenten zu Transportbehältern 5 zusammengebaut, teilweise als nicht montierte Mehrweg-Komponenten 50, 51, 52, 53, 54, 55.

So kann in einer Verbraucherstation 103, nachdem der Transportbehälter 5 entleert wurde, der Transportbehälter 5 auseinander gebaut und die einzelnen Komponenten 50, 51, 52, 53, 54, 55 zurück zur Kommissioniereinheit 102, insbesondere zu einer Aufnahmeeinheit 126 für leere Transportbehälter 5, transportiert werden. Alternativ dazu kann jedoch der Transportbehälter 5 auch in einem zusammengebauten Zustand zur Aufnahmeeinheit 126 für leere Transportbehälter 5 transportiert werden. Der Transportbehälter 5 wird jedoch spätestens vor dem Einlagern des Transportbehälters 5 bzw. seiner Komponenten 50, 51, 52, 53, 54, 55 in einem Behälterlager 121 auseinandergebaut. Erst wenn ein bestimmter Behälter 5 in der Kommissioniereinheit 124 benötigt wird, wird dieser aus den passenden Komponenten 50, 51, 52, 53, 54, 55 zusammengebaut. Auf diese Weise wird der Platzbedarf für die Lagerung von Mehrweg-Transportbehältern 5 deutlich reduziert.

Vor der Einlagerung kann außerdem der Transportbehälter 5 in einer Wasch-/ Sterilisiereinheit 127 gewaschen und/oder sterilisiert werden. Dieser Vorgang findet vorzugsweise ebenfalls statt, nachdem der Behälter 5 in seine einzelnen Komponenten 50, 51, 52, 53, 54, 55 zerlegt wurde. Die Reinigung eigenständiger Boden-, Wand- und ggf. Deckelteile 50, 51, 52, 53, 54, 55 ist wesentlich einfacher und gründlicher zu bewerkstelligen als die Reinigung zusammengebauter Behälter 5.

Wie durch den Pfeil L der Figuren 1 und 2 angedeutet, wird ein zusammengebauter und bestückter Transportbehälter 5 (wie im Zusammenhang mit den Figuren 3, 4 beschrieben) an eine Verbraucherstation 103 geliefert (Pfeil L). Der Verbraucher entnimmt dem Transportbehälter 5 die bestellten Waren. Anschließend wird der Transportbehälter 5, sei es zusammengebaut oder in Einzelkomponenten, wieder in die Kommissionierstation 102 verbracht (Pfeil R).

Für die Aufnahme benutzter, von den Verbraucherstationen 103 in die Kommissionierstation 102 zurück transportierter Transportbehälter 5 und/oder deren Komponenten 50, 51, 52, 53, 54, 55 weist die Kommissionierstation eine Aufnahmeeinheit 126 auf. Diese kann mit einer Demontage- und/oder Zerlegestation 1260 ausgestattet sein, in der noch nicht zerlegte Transportbehälter 5 in einzelne Komponenten 50, 51, 52, 53, 54, 55 zerlegt werden. Wie durch den Pfeil T3 angedeutet, gelangen die Komponenten 50, 51, 52, 53, 54, 55 von der Aufnahmeeinheit 126 in die Wasch-/ Sterilisiereinheit 127. Dort werden die Komponenten 50, 51, 52, 53, 54, 55 gewaschen und/oder sterilisiert. Wie durch den Pfeil T4 angedeutet, werden die gewaschenen Komponenten 50, 51, 52, 53, 54, 55 anschließend im Komponentenlager 121 eingelagert. Bei Bedarf wird, je nach der Art der Steuerungsdaten c, aus geeigneten Komponenten 50, 51, 52, 53, 54, 55 ein Transportbehälter 5 zusammengebaut. Zum Zusammenbauen weist das Komponentenlager 121 eine Montagestation 1210 auf. Wie durch den Pfeil T1 angedeutet, gelangt der zusammengebaute Transportbehälter 5 in die Kommissioniereinheit 124. Dort werden wiederum, gemäß den Steuerungsdaten d, die Waren einer Bestellung zusammengestellt und in den zum Auftrag (hinsichtlich Platzbedarf) passenden Transportbehälter 5 eingebracht.

Der Pfeil T2 deutet an, dass der fertig bestückte Transportbehälter 5 zur Auslieferungseinheit 125 transportiert und von dort zur entsprechenden Verbraucherstation 103 verbracht wird.

Die Figuren 3 und 4 zeigen beispielhaft einen Transportbehälter 5, wie er im erfindungsgemäßen System 101 zum Einsatz kommt, im zusammengesetzten und im demontierten/ zerlegten Zustand.

Die Figur 3 zeigt einen Transportbehälter 5, der aus einem Bodenteil 50, vier Wandteilen 51, 52, 53, 54 und optional einem Deckelteil 55, besteht. Die Komponenten 50, 51, 52, 53, 54 sind montiert, um einen Grundbehälter zu bilden. So können die Komponenten 50, 51, 52, 53, 54 beispielsweise über Steckverbindungen miteinander verbunden sein.

Das Deckelteil 55 ist in diesem Beispiel abgenommen. Die beiden Wandteile 51 und 53 weisen in diesem Beispiel Steckanschlüsse 512a, 512b,... bzw. 532a, 532b,... auf (diese sind der Einfachheit halber als Aufnahmen skizziert). Das Deckelteil 55 weist dazu passende komplementäre Steckanschlüsse 552a, 552b,... auf. Um ausreichende Stabilität der Steckverbindungen zu gewährleisten, können diese mit geeigneten Rastmitteln und/oder Arretierungsmitteln versehen sein.

In der Figur 4 sind beispielhaft und schematisch die Komponenten Bodenteil 50 und zwei der Wandteile 51, 54 dargestellt. Das Bodenteil 50 weist entlang seines Randbereichs Steckanschlüsse 500a, 500b, 500c,... auf, die im zusammengebauten Zustand in einer Steckverbindung oder Rastverbindung mit entsprechenden komplementären Steckanschlüssen 540a, 540b, 540c, ... bzw. 510a, 510b, 510c,... der Wandteile 54 bzw. 51 in Eingriff stehen. Die Wandteile 54 können entlang des dem benachbarten Wandteil 51 zugewandten Rands weitere Steckanschlüsse 541, 541b,... zum Anschluss komplementärer Steckanschlüsse 541a, 541b,... des benachbarten Wandteils 51 aufweisen.

Je nachdem in welcher Station oder zwischen welchen Stationen sich der Transportbehälter 5 im System 101 befindet, steht er entweder im montierten oder im demontierten Zustand bereit.

Insbesondere ist der Behälter 5 ein standardisierter Behälter, zusammengebaut aus Mehrweg-Komponenten, d.h. wenigstens Gruppen von Behältern sind baugleich. Außerdem sind die Komponenten 50, 51, 52, 53, 54, 55 des Behälters 5 standardisiert, d.h. wenigstens Gruppen von Komponenten sind baugleich. Durch den modularen Aufbau der Behälter 5 können aus Standardkomponenten verschieden große Behälter montiert werden. So kann das System 101 beispielsweise Seitenwände 51, 52, 53, 54 unterschiedlicher Höhe aufweisen, sodass ein Behälter 5 mit einem standardisierten Bodenteil 50 und, je nach dem für den Transport einer Bestellung erforderlichen Platzbedarf, mit geeigneter Wandhöhe bereitgestellt werden kann.

Das System 101 ist somit umweltfreundlich und sowohl hinsichtlich der Lagerung und der Handhabung der Transportbehälter flexibel.

## Patentansprüche

1. System (101) zur Bereitstellung von Konsumgütern, insbesondere von Lebensmitteln, umfassend:
wenigstens eine Verbraucherstation (103); und
eine zentrale Kommissionierstation (102) zur Kommissionierung von Waren bestellter Warenkörbe,
wobei
das System (1) eine Vielzahl von Transportbehältern (5) zum Transport der Waren des Warenkorbs umfasst, und die zentrale Kommissionierstation (102) eine Datenverarbeitungseinheit (20) zur Erfassung von Bestellungen eines Warenkorbs seitens der Verbraucherstation (103) aufweist und die zentrale Kommissionierstation (102) wenigstens eine Kommissioniereinheit (124) zur Zusammenstellung des bestellten Warenkorbs in einem der Transportbehälter (5) aufweist, und die Kommissionierstation (102) eine Aufnahmeeinheit (126) für die Aufnahme benutzter,
von den Verbraucherstationen (103) in die Kommissionierstation (102) zurück transportierter Transportbehälter (5) und/oder deren Komponenten (50, 51, 52, 53, 54, 55) aufweist, **dadurch gekennzeichnet, dass**
die Aufnahmeeinheit (126) wenigstens eine Demontageeinheit (1260) zum Zerlegen der von den Verbraucherstationen (103) in die Kommissionierstation (102) zurück transportierten Transportbehälter (5) aufweist,
wobei die Transportbehälter (5) aus standardisierten Komponenten (50, 51, 52, 53, 54, 55) aufgebaut und in diese Komponenten ( 51, 52, 53, 54, 55) durch die Demontageeinheit (1260) automatisiert zerlegbar sind, und wobei das System ein Behälterlager (121) aufweist, das zum automatisierten Einlagern der Komponenten (50, 51, 52, 53, 54, 55) der zerlegten Transportbehälter 5 ausgebildet ist, und das Behälterlager (121) eine Montagestation (1210) aufweist, die zum automatisierten Zusammenbau geeigneter und eingelagerter Komponenten zu einem Transportbehälter ausgebildet ist, wobei die Komponenten (50, 51, 52, 53, 54, 55) ausgehend von der Bestellung des Warenkorbs vor dem Zusammenbau so automatisiert ausgewählt werden, dass die Größe des Transportbehälters (5) dem Platzbedarf zum Transport der Waren des Warenkorbs entspricht; und wobei die Verbraucherstationen (103) zur Aufnahme wenigstens eines der befüllten Transportbehälter ausgebildet ist.

2. System (101) nach Anspruch 1,
**dadurch gekennzeichnet, dass**
die Komponenten (50, 51, 52, 53, 54, 55) Wandelemente umfassen, die Boden-, Wand- und/oder Deckelteile des Transportbehälters (5) bilden.

3. System (101) nach einem der vorhergehenden Ansprüche,
**dadurch gekennzeichnet, dass**
die Komponenten (50, 51, 52, 53, 54, 55) Verbindungsanschlüsse (500a, 500b, 500c,...; 511a, 511b,...; 512a, 512b,...; 532a, 532b,...; 540a, 540b,...; 541a, 541b,...; 552a, 552b,...) aufweisen, die mit den Verbindungsanschlüssen einer benachbart angeordneten Komponente verbindbar sind.

4. System (101) nach Anspruch 3,
**dadurch gekennzeichnet, dass**
die Verbindungsanschlüsse (500a, 500b, 500c,...; 511a, 511b,...; 512a, 512b,...; 532a, 532b,...; 540a, 540b,...; 541a, 541b,...; 552a, 552b,...) zur Herstellung einer reibschlüssigen, kraftschlüssigen und/oder formschlüssigen Verbindung ausgebildet sind.

5. System (101) nach einem der vorhergehenden Ansprüche 3 oder 4,
**dadurch gekennzeichnet, dass**
die Verbindungsanschlüsse (500a, 500b, 500c,...; 511a, 511b,...; 512a, 512b,...; 532a, 532b,...; 540a, 540b,...; 541a, 541b,...; 552a, 552b,...) zur Herstellung einer Steckverbindung und/oder einer Rastverbindung ausgebildet sind.

6. System (101) nach einem der vorhergehenden Ansprüche,
**dadurch gekennzeichnet, dass**
die Kommissionierstation (102) wenigstens eine Wasch-/ Sterilisiereinheit (127) zum Waschen und/oder Sterilisieren von Komponenten (50, 51, 52, 53, 54, 55) der von der Verbraucherstationen (103) in die Kommissionierstation (102) zurück transportierten und zerlegten Transportbehälter (5) aufweist.

7. Verfahren zur Bereitstellung von Konsumgütern, insbesondere von Lebensmitteln, mittels einem System nach den Ansprüchen 1 bis 6, umfassend die folgenden Schritte:
a) Übertragung von Daten (b) zur Zusammenstellung eines Warenkorbs aus einer Vielzahl von Waren von der Verbraucherstation (103) zu einer Kommissionierstation (102); und
b) Übertragung von Steuerungsdaten (c) an ein Behälterlager (121) zur automatisierten Auswahl von Komponenten (50, 51, 52, 53, 54, 55) eines Transportbehälters (5) ausgehend von einer Bestellung des Warenkorbs;
**gekennzeichnet durch** die Schritte:
c) Automatisierter Zusammenbau aufgrund der Steuerdaten c des geeigneten Transportbehälters (5) aus standardisierten, im Behälterlager (121) gelagerten Komponenten (50, 51, 52, 53, 54, 55);
d) Zusammenstellung der Waren des bestellten Warenkorbs in dem Transportbehälter (5) in einer Kommissioniereinheit (124) der Kommissionierstation (102);
e) Abgabe des Transportbehälters (5) an eine Verbraucherstation (103), die zur Aufnahme eines Transportbehälters (5) ausgebildet ist; und
f) Zerlegen des von der Verbraucherstation (103) in die Kommissionierstation (102) zurück transportierten Transportbehälters (5) in einer Demontageeinheit (1260).

8. Verfahren nach Anspruch 7,
**dadurch gekennzeichnet, dass**
das Verfahren als weiteren Schritt den Transfer des von der Kommissioniereinheit (124) bereitgestellten Transportbehälters (5) an eine Auslieferungseinheit (125) zur Auslieferung an eine durch die Bestellung vorgegebene Verbraucherstation (103) aufweist.

9. Verfahren nach einem der Ansprüche 7 oder 8,
**dadurch gekennzeichnet, dass**
das Verfahren als weiteren Schritt das automatisierte Zerlegen eines von der Verbraucherstation (103) zur Kommissionierstation (102) zurück transferierten Transportbehälters (5) in einzelne Komponenten (50, 51, 52, 53, 54, 55) aufweist.

10. Verfahren nach einem der Anspruch 9,
**dadurch gekennzeichnet, dass**
das Verfahren als weiteren Schritt den Transfer der Komponenten (50, 51, 52, 53, 54, 55) der in der Demontage- und/oder Zerlegestation (1260) zerlegten Transportbehälter (5) zu einer Wasch-/ Sterilisiereinheit (127) zum Waschen und/oder Sterilisieren des Transportbehälters (5) aufweist.

11. Verfahren nach einem der Ansprüche 7 bis 10,
**dadurch gekennzeichnet, dass**
das Verfahren als weiteren Schritt das automatisierte Einlagern der Komponenten (50, 51, 52, 53, 54, 55) der zerlegten Transportbehälter (5) in das Behälterlager (121) aufweist.

## Claims

1. System (101) for providing consumer goods, in particular foodstuffs, comprising:
at least one consumer station (103); and
a central picking station (102) for picking goods from ordered shopping baskets,
wherein the system (1) comprises a plurality of transport containers (5) for transporting the goods of the shopping basket, and the central picking station (102) has a data processing unit (20) for recording orders for a shopping basket from the consumer station (103), and the central picking station (102) has at least one picking unit (124) for assembling the ordered shopping basket in one of the transport containers (5), and the picking station (102) has a receiving unit (126) for receiving used transport containers (5) and/or their components (50, 51, 52, 53, 54) transported back from the consumer stations (103) back to the picking station (102),
**characterized in that**
the receiving unit (126) has at least one dismantling unit (1260) for collapsing the transport containers (5) returned by the consumer stations (103) to the picking station (102),
the receiving unit (126) has at least one dismantling unit (1260) for dismantling the transport containers (5) transported back from the consumer stations (103) to the picking station (102), wherein the transport containers (5) are constructed from standardized components (50, 51, 52, 53, 54, 55) and can be automatically collapsed into these components ( 51, 52, 53, 54, 55) by the dismantling unit (1260), and
wherein the system comprises a container storage facility (121) which is configured to the automated storage of the components (50, 51, 52, 53, 54, 55) of the collapsed transport containers 5, and the container storage facility (121) has an assembly station (1210) which is configured to the automated assembly of suitable and stored components into a transport container, wherein the components (50, 51, 52, 53, 54, 55) are automatically selected prior to assembly based on the shopping basket order so that the size of the transport container (5) corresponds to the space required to transport the goods in the shopping basket; and wherein the consumer stations (103) are formed to receive at least one of the filled transport containers.

2. System (101) according to claim 1,
**characterized in that**
the components (50, 51, 52, 53, 54, 55) comprise wall elements forming the base, wall and/or lid parts of the transport container (5).

3. System (101) according to one of the previous claims,
**characterized in that**
the components (50, 51, 52, 53, 54, 55) comprise connecting ports (500a, 500b, 500c, ...; 511a, 511b, ...; 512a, 512b, ...; 532a, 532b, ...; 540a, 540b, ...; 541a, 541b, ...; 552a, 552b, ...) which can be connected to the connection terminals of an adjacent component.

4. System (101) according to claim 3,
**characterized in that**
the connection terminals (500a, 500b, 500c, ...; 511a, 511b, ...; 512a, 512b, ...; 532a, 532b, ...; 540a, 540b, ...; 541a, 541b, ...; 552a, 552b, ...) are configured to make a friction-locked, force-locked and/or form-locked connection.

5. System (101) according to one of the previous claims 3 or 4,
**characterized in that**
the connection terminals (500a, 500b, 500c, ...; 511a, 511b, ...; 512a, 512b, ...; 532a, 532b, ...; 540a, 540b, ...; 541a, 541b, ...; 552a, 552b, ...) are configured to make a plug connection and/or a snap-fit connection.

6. System (101) according to one of the previous claims,
**characterized in that**
the picking station (102) comprises at least one washing/sterilization unit (127) for washing and/or sterilizing components (50, 51, 52, 53, 54, 55) of the transport container (5) transported back from the consumer stations (103) to the picking station (102) and collapsed.

7. Method for providing consumer goods, in particular foodstuffs, by means of a system according to claims 1 to 6, comprising the following steps:
a) transmission of data (b) for compiling a shopping basket from a plurality of goods from the consumer station (103) to a picking station (102); and
b) transmission of control data (c) to a container warehouse (121) for the automated selection of components (50, 51, 52, 53, 54, 55) of a transport container (5) based on an order for the shopping basket;
**characterized by** the steps:
c) automated assembly, based on the control data c, of the appropriate transport container (5) from standardized components (50, 51, 52, 53, 54, 55) stored in the container warehouse (121);
d) compiling the goods from the ordered shopping basket in the transport container (5) in a picking unit (124) of the picking station (102);
e) delivery of the transport container (5) to a consumer station (103) configured to receive a transport container (5); and
f) collapsing the transport container (5) transported back from the consumer station (103) to the picking station (102) in a disassembly unit (1260).

8. Method according to claim 7,
**characterized in that**
the method comprises a further step of transferring the transport container (5) provided by the picking unit (124) to a delivery unit (125) for delivery to a consumer station (103) specified by the order.

9. Method according to one of claims 7 or 8,
**characterized in that**
the method comprises as a further step the automated collapse of a transport container (5) transferred back from the consumer station (103) to the picking station (102) into separate components (50, 51, 52, 53, 54, 55).

10. Method according to one of claims 9,
**characterized in that**
the method comprises as a further step the transfer of the components (50, 51, 52, 53, 54, 55) of the transport container (5) collapsed in the disassembly and/or collapsing station (1260) to a washing/sterilization unit (127) for washing and/or sterilizing the transport container (5).

11. Method according to one of claims 7 to 10,
**characterized in that**
the method comprises as a further step the automated storage of the components (50, 51, 52, 53, 54, 55) of the collapsed transport containers (5) in the container storage (121).

## Revendications

1. Système (101) pour fournir des biens de consommation, en particulier des denrées alimentaires, comprenant :
au moins une station de consommation (103) ; et
une station centrale de préparation des commandes (102) pour préparer les articles des paniers commandés,
le système (1) comprenant une pluralité de conteneurs de transport (5) pour transporter les articles du panier, et la station centrale de préparation des commandes (102) comprenant une unité de traitement de données (20) pour enregistrer les commandes d'un panier provenant de la station de consommation (103), et la station centrale de préparation des commandes (102) comprend au moins une unité de préparation des commandes (124) pour assembler le panier de marchandises commandé dans l'un des conteneurs de transport (5), et la station de préparation des commandes (102) comprend une unité de réception (126) pour recevoir les conteneurs de transport (5) utilisés, renvoyés par les stations de consommateurs (103) vers la station de préparation des commandes (102), et/ou de leurs composants (50, 51, 52, 53, 54, 55),
**caractérisé en ce que**
l'unité de réception (126) comporte au moins une unité de démontage (1260) pour démonter les conteneurs de transport (5) ramenés des stations de consommation (103) vers la station de préparation des commandes (102), les conteneurs de transport (5) étant constitués de composants standardisés (50, 51, 52, 53, 54, 55) et peuvent être démontés automatiquement en ces composants ( 51, 52, 53, 54, 55) par l'unité de démontage (1260), et le système comportant un entrepôt de conteneurs (121) qui est conçu pour le stockage automatisé des composants (50, 51, 52, 53, 54, 55) des conteneurs de transport démontés 5, et le magasin de conteneurs (121) comprend une station de montage (1210) conçue pour assembler automatiquement les composants appropriés et stockés afin de former un conteneur de transport, les composants (50, 51, 52, 53, 54, 55) sont sélectionnés de manière automatisée avant l'assemblage, sur la base de la commande du panier, de telle sorte que la taille du conteneur de transport (5) corresponde à l'espace nécessaire pour transporter les marchandises du panier ; et les stations de consommation (103) sont conçues pour recevoir au moins l'un des conteneurs de transport remplis.

2. Système (101) selon la revendication 1,
**caractérisé en ce que**
les composants (50, 51, 52, 53, 54, 55) comprennent des éléments de paroi qui forment les parties de fond, de paroi et/ou de couvercle du conteneur de transport (5).

3. Système (101) selon l'une des revendications précédentes,
**caractérisé en ce que**
les composants (50, 51, 52, 53, 54, 55) comportent des raccords de connexion (500a, 500b, 500c,... ; 511a, 511b,... ; 512a, 512b,... ; 532a, 532b,... ; 540a, 540b,... ; 541a, 541b,... ; 552a, 552b,...) qui peuvent être reliés aux raccords de connexion d'un composant adjacent.

4. Système (101) selon la revendication 3,
**caractérisé en ce que**
les raccords de connexion (500a, 500b, 500c,... ; 511a, 511b,... ; 512a, 512b,... ; 532a, 532b,... ; 540a, 540b,... ; 541a, 541b,... ; 552a, 552b,...) sont conçus pour établir une connexion par friction, par adhérence et/ou par complémentarité de forme.

5. Système (101) selon l'une des revendications 3 ou 4 précédentes,
**caractérisé en ce que**
les raccords de connexion (500a, 500b, 500c,... ; 511a, 511b,... ; 512a, 512b,... ; 532a, 532b,... ; 540a, 540b,... ; 541a, 541b,... ; 552a, 552b,...) sont conçus pour établir une connexion enfichable et/ou une connexion à encliquetage.

6. Système (101) selon l'une des revendications précédentes,
**caractérisé en ce que**
la station de préparation des commandes (102) comprend au moins une unité de lavage/stérilisation (127) pour laver et/ou stériliser les composants (50, 51, 52, 53, 54, 55) des conteneurs de transport (5) transportés en retour par les stations de consommation (103) vers la station de préparation des commandes (102) et démontés.

7. Procédé de mise à disposition de biens de consommation, en particulier de denrées alimentaires, au moyen d'un système selon les revendications 1 à 6, comprenant les étapes suivantes :
a) transmission de données (b) pour la composition d'un panier de marchandises à partir d'une pluralité de marchandises depuis la station de consommation (103) vers une station de préparation des commandes (102) ; et
b) transmission de données de commande (c) à un entrepôt de conteneurs (121) pour la sélection automatisée de composants (50, 51, 52, 53, 54, 55) d'un conteneur de transport (5) à partir d'une commande du panier de marchandises ;
**caractérisé par** les étapes suivantes :
c) assemblage automatisé, sur la base des données de commande c, du conteneur de transport approprié (5) à partir de composants standardisés (50, 51, 52, 53, 54, 55) stockés dans l'entrepôt de conteneurs (121) ;
d) assemblage des marchandises du panier commandé dans le conteneur de transport (5) dans une unité de préparation des commandes (124) de la station de préparation des commandes (102) ;
e) remise du conteneur de transport (5) à une station de consommation (103) conçue pour recevoir un conteneur de transport (5) ; et
f) démontage du conteneur de transport (5) ramené de la station de consommation (103) à la station de préparation des commandes (102) dans une unité de démontage (1260).

8. Procédé selon la revendication 7,
**caractérisé en ce que**
le procédé comprend comme étape supplémentaire le transfert du conteneur de transport (5) fourni par l'unité de préparation des commandes (124) vers une unité de livraison (125) pour la livraison à une station de consommation (103) spécifiée par la commande.

9. Procédé selon l'une des revendications 7 ou 8,
**caractérisé en ce que**
le procédé comprend comme étape supplémentaire le démontage automatisé d'un conteneur de transport (5) transféré de la station de consommation (103) vers la station de préparation des commandes (102) en composants individuels (50, 51, 52, 53, 54, 55).

10. Procédé selon l'une des revendications 9,
**caractérisé en ce que**
le procédé comprend comme étape supplémentaire le transfert des composants (50, 51, 52, 53, 54, 55) du conteneur de transport (5) démonté dans la station de démontage et/ou de désassemblage (1260) vers une unité de lavage/stérilisation (127) pour le lavage et/ou la stérilisation du conteneur de transport (5).

11. Procédé selon l'une des revendications 7 à 10,
**caractérisé en ce que**
le procédé comprend comme étape supplémentaire le stockage automatisé des composants (50, 51, 52, 53, 54, 55) des conteneurs de transport démontés (5) dans l'entrepôt de conteneurs (121).
